Europäisches Patentamt

European Patent Office

Office européen des brevets

(11) Veröffentlichungsnummer: **0 236 782 B1**

# EUROPÄISCHE PATENTSCHRIFT

(45) Veröffentlichungstag der Patentschrift: **18.09.91**

(51) Int. Cl.5: **A61C 13/00, A61C 5/10**

(21) Anmeldenummer: **87102089.7**

(22) Anmeldetag: **13.02.87**

(54) **Verfahren zur Herstellung von metallischen Zahnersatzteilen.**

(30) Priorität: **10.03.86 DE 3607915**

(43) Veröffentlichungstag der Anmeldung:
**16.09.87 Patentblatt 87/38**

(45) Bekanntmachung des Hinweises auf die
Patenterteilung:
**18.09.91 Patentblatt 91/38**

(84) Benannte Vertragsstaaten:
**AT BE CH DE ES FR GB GR IT LI LU NL SE**

(56) Entgegenhaltungen:
**DE-A- 1 919 652**
**DE-A- 3 218 300**
**DE-C- 283 518**
**DE-C- 519 350**
**US-A- 1 612 605**

(73) Patentinhaber: **PRODENTA AG**
**Landenburgstrasse 34**
**CH-6003 Luzern(CH)**

(72) Erfinder: **Hornig, Wolfgang, Dr.**
**Gutenbergstrasse 9**
**W-6902 Sandhausen(DE)**

(74) Vertreter: **Haft, Berngruber, Czybulka**
**Postfach 14 02 46 Hans-Sachs-Strasse 5**
**W-8000 München 5(DE)**

**Beschreibung**

Die Erfindung betrifft ein verfahren zur Herstellung von metallischen Zahnersatzteilen, wie z. B. Kronen, Inlays, Brücken, Prothesen etc., bei dem von dem zu behandelnden Zahn bzw. Kiefer ein Abdruck mittels eines elektrisch nichtleitenden Materials hergestellt wird.

Derartige in der Zahnmedizin gebräuchliche Metallkonstruktionen werden üblicherweise im Gießverfahren hergestellt. Ein derartiges Gießverfahren beinhaltet eine Folge von Teilarbeitsgängen und somit Fehlermöglichkeiten, deren Summe die Präzision des hergestellten Zahnersatzteils beeinträchtigen. Ferner sind Güsse, was die mikroskopische Struktur betrifft, inhomogen, schrumpfen beim Erkalten und müssen zudem nach dem Entfernen aus der Gußform durch Schleifen und Polieren nachbearbeitet werden, wodurch Materialverluste in Höhe von 10 bis 15% des gegossenen Teils anfallen.

Von den hohen Produktionskosten bei der Anfertigung von Zahnersatzteilen entfallen bei Verwendung hochwertiger Legierungen ca. 60% auf die Lohnkosten und 40% auf die Materialkosten. Dieses Verhältnis verschiebt sich bei der Verwendung von minderwertigen Legierungen auf etwa 80 bis 90% Lohnkosten.

Um die Nachteile von gegossenen Zahnersatzteilen zu vermeiden, wurde bereits in der DE-OS 25 18 355 ein Verfahren zur Herstellung künstlicher Zahnkonstruktionen vorgeschlagen, wobei auf ein vorgeformtes Modell ein geeignetes Metall elektrolytisch abgeschieden wird, um anschließend auf der so gebildeten Form die künstliche Zahnkonstruktion aufzubauen. Insbesondere zur Herstellung einer Zahnkrone wird dabei vom Zahn des Patienten ein Abdruck genommen, nach diesem Abdruck ein Zahnmodell hergestellt, dieses Modell metallisiert und in einen Elektrolyten eingebracht, welcher Ionen des abzuscheidenden Metalles enthält, so daß auf dem Modell elektrolytisch eine Metallschicht abgeschieden wird, um eine Form zu erzeugen, auf die Porzellan aufgebracht wird, wonach letztlich die metallische Form vom Porzellan entfernt wird.

Obwohl dies darin verwendete Verfahren die bekannten Schwierigkeiten beim Gießen, wie z. B. das Auftreten von Lunkern und den hohen Materialverbrauch vermeidet, weist es noch den Nachteil auf, keine homogene gleichmäßige galvanische Abscheidung zu ermöglichen, da das Metallisieren des aus einem elektrisch nichtleitfähigen Material bestehenden Modells bezüglich einer gleichmäßigen Verteilung erhebliche Probleme aufwirft.

Aus der DE-OS 32 18 300 ist zur Vermeidung dieser Schwierigkeiten ein Verfahren zum Herstellen von Zahnersatzteilen aus Metall bekannt, insbesondere aus Gold, bei dem man ein Modell des Ersatzteiles herstellt, von dem Modell eine Gießform herstellt, in der Gießform unter Druck einen metallischen Abguß des Modells mit einer eigens dafür entwickelten Maschine herstellt und anschließend diesen metallischen Abguß galvanisch in einem Galvanisierzentrum mit einer mechanisch zusammenhängenden Schicht eines Edelmetalls überzieht, um nach dem Entfernen des Abgusses das so erhaltene Ersatzteil ggfs. mit einem Überzug aus Porzellan, Kunststoff oder dgl. zu versehen.

Aus der DE-B 519 350 ist es schließlich bekannt, Träger künstlicher Zähne, wie z. B. Gaumenplatten, dadurch herzustellen, daß von dem Abdruck ein positives Formstück dadurch hergestellt wird, daß auf der negativen Seite im Gießvorgang ein Gußüberzug aus leicht schmelzbarem Metall angebracht wird. Das so auf dem Gipsabdruck gebildete metallene Formstück wird nach dem Abbrennen dazu benutzt, auf galvanoplastischem Wege ein neues, zweites Negativ aus Metall zu bilden, dessen Form der im Abdruck festgehaltenen Gaumenfläche entspricht. Dieses wird dann einem galvanischen Bad zugeführt, um so die eigentliche, starre Galvanoplatte zu bilden, wonach das als Träger dienende metallene Formstück entfernt wird. Auch hier wird also von einem Erstmodell ein Zweitmodell hergestellt und darauf das Zahnersatzteil aufgebaut.

Aufgabe der vorliegenden Erfindung ist es, ein einfaches und wirtschaftliches Verfahren zum Herstellen metallischer Zahnersatzteile zu schaffen, bei dem ohne großen Aufwand, insbesondere ohne besondere Galvanisierzentren bzw. ohne Gießapparaturen für den metallenen Abguß und daher kostengünstig, hochkarätige Präzisions-Zahnersatzteile auf dem Erstmodell hergestellt werden können, ohne daß es wie bei den bekannten Verfahren notwendig ist, von dem Erstmodell in einem komplizierten Verfahren ein Zweitmodell herzustellen und auf diesem Zweitmodell das Zahnersatzteil aufzubauen.

Diese Aufgabe wird durch Verfahren wie sie in den Ansprüchen 1 oder 6 angegeben sind, gelöst.

Weitere vorteilhafte Ausgestaltungen des erfindungsgemäßen Verfahrens sind in den Unteransprüchen beschrieben.

Das Galvanisieren verschiedener Metalle im Sandwichverfahren ermöglicht bei einer Wärmebehandlung, z. B. beim Brennvorgang von Porzellan, ein Legieren der verschiedenen Metalle und somit eine Steuerung der physikalischen bzw. chemischen Eigenschaften.

Mit dem erfindungsgemäßen Verfahren ist es möglich, kostengünstig Zahnersatzteile herzustellen, die eine große Homogenität des Metalls aufweisen. Eine Gewichtsersparnis von 70 bis 80% gegenüber dem Gießverfahren ist ohne weiteres erzielbar, während durch den Wegfall der Nachbearbeitung und der Gießverluste erhebliche Kosten eingespart werden können. Durch weitgehende Automatisierung ist es im Galvanisierverfahren möglich, die Metallteile rationell herzustellen. Da die beim Gießverfahren und durch das Expansionsverhalten der Metalle beim Erhitzen und bei der Kontratkion beim Erkalten auftretenden Fehlerquellen beim Galvanisieren wegfallen, lassen sich hochpräzise Zahnersatzteile herstellen.

Insbesondere wird bei diesem Verfahren das Ersatzteil nach dem Erstmodell hergestellt, was die Möglichkeit von Duplizierfehlern vermeidet.

Die Erfindung wird im folgenden anhand der Zeichnung näher erläutert, wobei in den Fig. 1 bis 14 schematisch die einzelnen Verfahrensschritte zur Herstellung einer Zahnkrone dargestellt sind, in den Fig. 15 bis 17 zusätzliche Verfahrensschritte zur Herstellung einer Konuskrone dargestellt sind und in den Fig. 18 bis 24 Verfahrensschritte zur Herstellung einer partiellen Prothese dargestellt sind. Die Erfindung ist jedoch nicht auf die Herstellung von Kronen beschränkt, sondern ermöglicht es, auch andere Zahnersatzteile, wie Brücken, Inlays, Metallbasen für Prothesen und Konuskronen herzustellen.

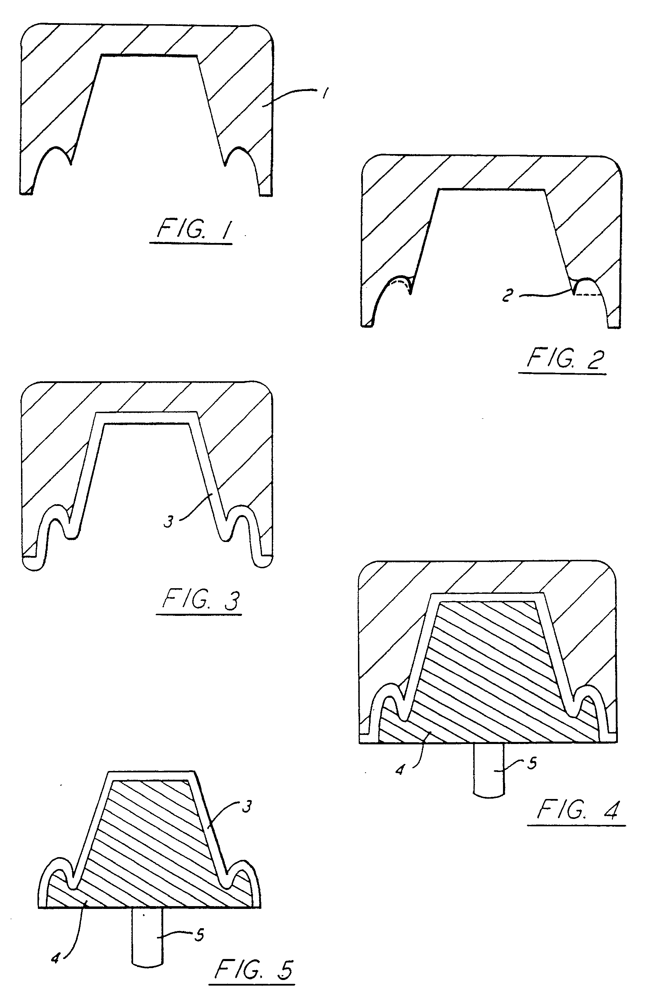

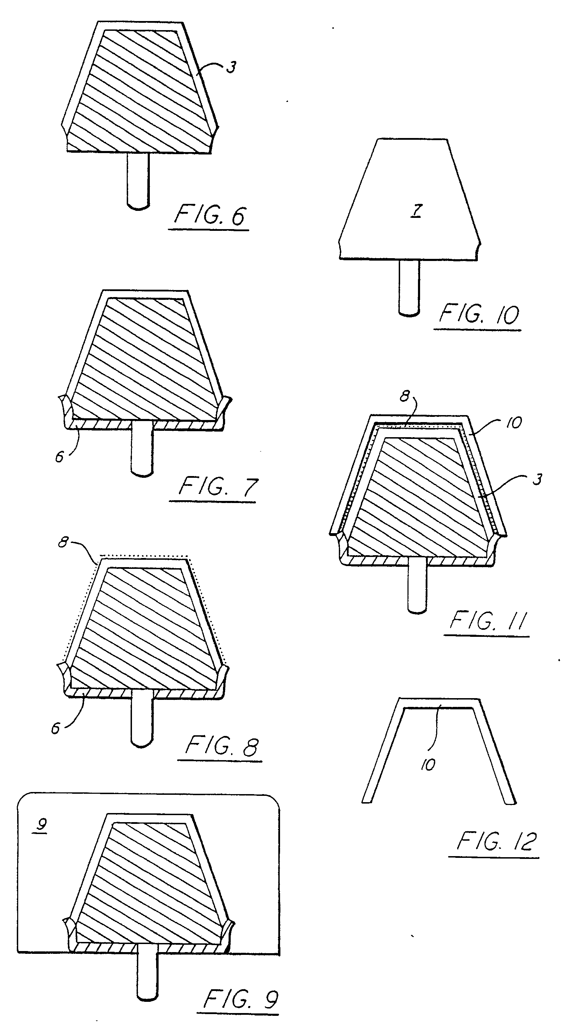

Das erfindungsgemäße Verfahren zur Herstellung von Kronen besteht darin, daß gemäß Fig. 1 ein Abdruck 1 eines Zahnes aus einem elektrisch nichtleitenden Material hergestellt wird, wonach dieser Abdruck im Bereich der dünnwandigen unter das Zahnfleisch gehenden Stellen 2 (Fig. 2) mit einem elektrisch leitenden Lack besprüht und anschließend galvanisch stabilisiert wird, z. B. mit Kupfer, oder mit geeignetem Material hinterfüllt wird. Anschließend wird gemäß Fig. 3 die Innenwand des Abdrucks 1 mit einer erhitzten niedrigschmelzenden Legierung, wie z. B. Blei, Wismut und/oder mit einer Schichtdicke von ca. 1 bis 2 mm ausgesprüht. Nach dem Erkalten und Erstarren dieser Schicht 3 aus elektrisch gut leitfähigem Material wird nun deren Innenraum mit einem Füllmaterial ausgegossen, wie z. B. Gips (Fig. 4) oder Kunststoff 4, in dem ein oder zwei Haltestifte (Dowelpin) 5 angeordnet werden. Anschließend wird das derart entstandene Positivmodell vom Abdruck 1 getrennt (Fig. 5).

Es ist auch möglich, ein mit herkömmlichem Stumpfmaterial ausgegossenes Modell durch Aufdampfen einer Metallschicht, durch Leitlack, stromlose Metallbeschichtung elektrisch leitfähig zu machen und anschließend die in Fig. 8 dargestellte Zwischenschicht aufzutragen. Der Abdruck kann auch mit einem elektrisch leitfähigen Kunststoff ausgegossen werden. Eine andere Möglichkeit besteht darin, den Abdruck im stromlosen Reduktionsverfahren innen zu beschichten und mit Stumpfmaterial auszugießen.

Nun erfolgt ein ev. notwendiges Verfeinern der Oberfläche des so entstandenen Positivmodells, z. B. durch Ausblocken mittels eines Lötverfahrens, sowie das Festlegen der Präparationsgrenze (Fig. 6).

Die nicht zu galvanisierenden Stellen des Positivmodells 4 werden nun durch Beschichten mit einem elektrisch nichtleitenden Material 6 versehen (Fig. 7), wonach das derart vorbereitete Positivmodell in ein geeignetes galvanisches Bad eingetaucht wird, um so eine Zwischenschicht 8 auf dem Positivmodell zu erzeugen, die aus einem später leicht zu entfernenden Metall, wie z. B. Kupfer oder Nickel, besteht, wobei die Dicke der Schicht 8 dem später als Zementspalt benötigten Zwischenraum zwischen Krone und Zahnstumpf entsprechen kann (Fig. 8).

Nach der Ausbildung der Zwischenschicht 8 wird das Modell 4, 3, 8 durch ein geeignetes Abdruckmaterial 9 dupliziert, um ein Zweitmodell 7 herzustellen (Fig. 9 und 10).

Nach dem Auftragen der Zwischenschicht 8 wird das Positivmodell mit dieser Zwischenschicht in ein zweites galvanisches Bad getaucht, in dem eine gewünschte Legierung vorhanden ist oder in mehrere unterschiedliche galvanische Bäder anschließend eingebracht, um nun galvanisch eine oder mehrere Schichten 10 aus hochschmelzenden Metallen, insbesondere Edelmetallen, wie z. B. Gold, auf der Zwischenschicht 8 abzuscheiden (Fig. 11).

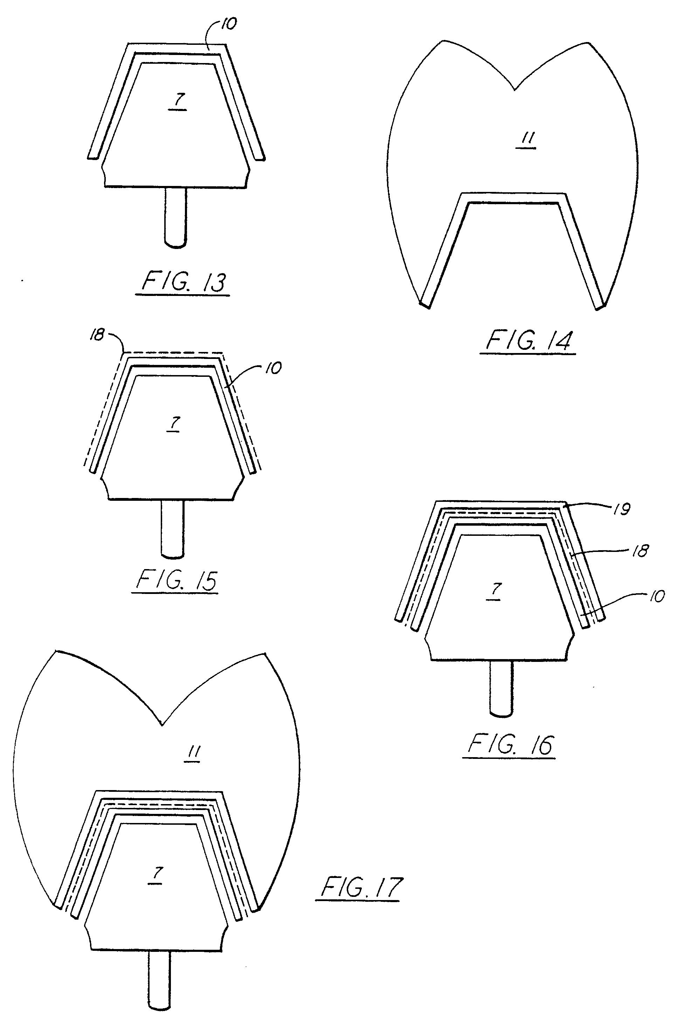

Wie Fig. 12 zeigt, wird anschließend durch Wärme bzw. einen Ätzvorgang das Füllmaterial 4, die Schicht 3 aus niedrigschmelzender Legierung und die Zwischenschicht 8 entfernt, so daß eine Kronenhülse 10 übrigbleibt, die auf das gemäß Fig. 9 hergestellte Zweitmodell 7 zur Weiterverarbeitung aufgesetzt wird (Fig. 13). Nun kann in herkömmlicher Weise auf diese Krone aus ästhetischen Gründen Porzellan und/oder Kunststoff 11 aufgebracht werden, um eine gute Haftung zu erzielen, die Oberfläche der Kronenhülse 10 z.B. durch Abstrahlen mit Aluminiumoxid aufgerauht oder durch Silanisieren vorbereitet werden kann. Das Porzellan 11 kann dann anschließend aufgebrannt werden bzw. der Kunststoff aufgetragen werden. (Figur 14)

Gemäß dem erfindungsgemäßen Verfahren können auch Brücken hergestellt werden. Hierbei wird ebenfalls der vom Zahnarzt gelieferte Abdruck im Bereich der dünnwandigen unter das Zahnfleisch gehenden Stellen mit einem elektrisch leitenden Lack besprüht und anschließend galvanisch z.B. mit Kupfer stabilisiert. Danach wird dieser Abdruck inwandig mit einer Schicht aus einer niedrigschmelzenden Legierung in einer Schichtdicke von ca. 1 bis 2 mm ausgesprüht und nach dem Erstarren der Innenraum dieser Metallschicht mit Gips oder Kunststoff ausgegossen. Nach dem Trennen vom Abdruck wird die Außenwand der Legierungsschicht verfeinert, die Präparationsgrenze festgelegt und das so entstandene Positivmodell mit einem geeigneten Abdruckmaterial dupliziert und ein Zweitmodell hergestellt.

Das erforderliche Zwischenglied für eine Brükke ist herstellbar durch Aufwachsen von Wachsfertigteilen, Besprühen mit einem elektrisch leitenden Lack, Aufschleifen und Anlöten von aufbrennbaren Metallfertigteilen oder Porzellanfertigteilen, wonach die nicht zu galvanisierenden Stellen der elektrisch leitfähigen Positivmodelle durch Beschichten mit einem elektrisch isolierenden Material versehen und anschließend in einem geeigneten Galvanisierbad beschichtet werden. Nach dem Galvanisieren wird das Wachs ausgeschmolzen und das hohle Zwischenglied mit Verblendmaterial verfüllt oder bei Porzellanfertigteilen beim Brennen der Verblendung mitgebrannt.

Bei der Herstellung eines verblendeten Inlays wird ebenfalls die Innenwand des Abdrucks mit einer Schicht aus niedrigschmelzender Legierung in einer Dicke von ca. 1 bis 2 mm ausgesprüht. Nach dem Ausgießen des Hohlraums mit Gips oder Kunststoff und Abtrennen vom Abdruck wird die Außenwand des Positivmodells verfeinert, die nicht zu galvanisierenden Stellen des Positivmodells durch Beschichten mit einer eletrisch isolierenden Substanz versehen und anschließend in einem geeigneten Galvanisierbad mit Metall beschichtet. Anschließend wird in herkömmlicher Weise Porzellan bzw. Kunststoff aufgebracht.

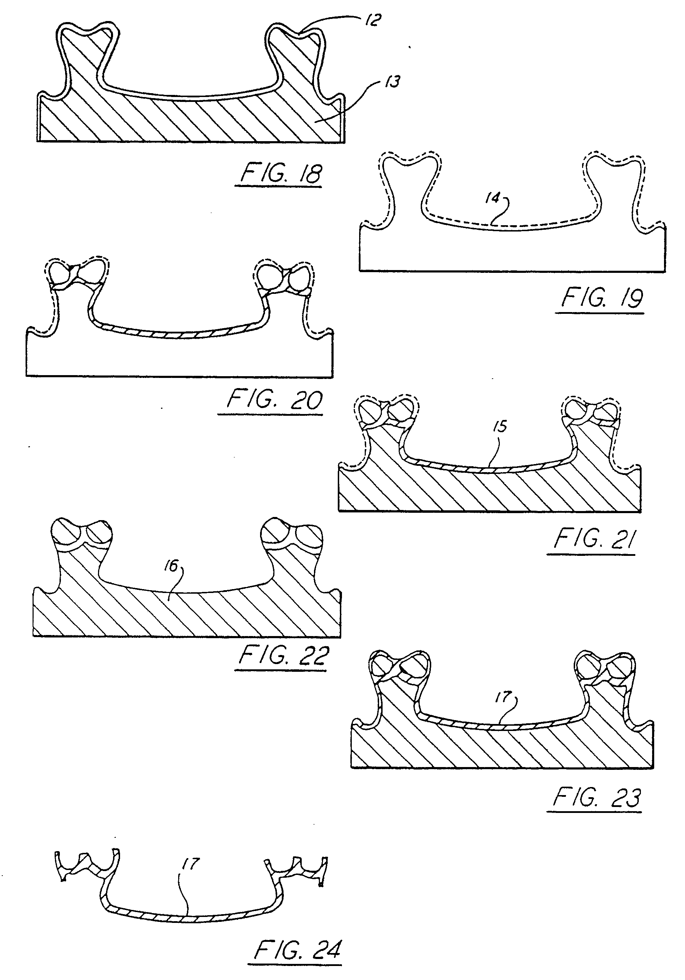

Bei dem erfindungsgemäßen Verfahren zur Herstellung von partiellen Prothesenbasen gemäß Figuren 18 bis 24 wird der vom Zahnarzt gelieferte Abdruck mit einer erhitzten niedrigschmelzenden Legierung 12 ausgesprüht, so daß eine Metallschicht von ca. 1 bis 2 mm Dicke entsteht, die nach dem Erstarren mit einem Kunststoff bzw. Gips 13 ausgegossen wird. (Figur 18). Das so gewonnene Positivmodell wird vom Abdruckmaterial getrennt und verfeinert, d.h. ausgeblockt bzw. korrigiert, wonach eine Zwischenschicht 14 aufgetragen wird (Figur 19). Danach wird es mit einem geeigneten Abdruckmaterial dupliziert und ein Duplikat hergestellt. Nun werden Wachsfertigteile 15 aufgelegt (Figur 20) und die nicht zu galvanisierenden Stellen mit einer elektrisch isolierenden Substanz 16 besprüht (Figur 21) und anschließend die Wachsteile 15 entfernt (Figur 22) (Schablonenverfahren). Anschließend werden mit der jeweils gewünschten Legierung die einzelnen galvanischen Schichten 17 abgeschieden, wobei ebenfalls mehrere galvanische Bäder infrage kommen. (Figur 23). Danach wird durch Erhitzen das Modell 17 von der erhaltenen Metallplatte abgenommen und die partielle Prothesenbasis zur Weiterverarbeitung auf das Duplikat aufgesetzt. (Figur 24).

Bei dem erfindungsgemäßen Verfahren zur Herstellung von Konuskronen wird ebenfalls der gelieferte Abdruck inwandig mit einer Schicht einer niedrigschmelzender Legierung und einer Dicke von ca. 1 bis 2 mm ausgesprüht und vom Abdruck getrennt. Nun wird entweder niedrigschmelzendes Metall oder Wachs aufgetragen gefräst. Danach werden die nicht zu galvanisierenden Stellen mit elektrisch isolierender Substanz versehen und das Teil in ein geeignetes Galvanisierbad getaucht, wobei auch hier eine Zwischenschicht mit einem später leicht zu entfernenden Metall aufgebracht wird, deren Dicke dem später benötigten Zementspalt entsprechen kann. Nach dem Aufbringen der galvanischen Schichten aus hochschmelzenden Metallen, z.B. Edelmetalle, in einer Dicke von 0,15 bis 0,5 mm wird eine der späteren Abzugskraft zwischen Primärkrone und Sekundärkrone genau definierte und leicht zu entfernende Metallschicht 18 (Figur 15) zusätzlich aufgetragen. Danach wird das so erhaltene Modell komplett dupliziert, der entstandene Abdruck ebenfalls mit einer niedrigschmelzenden Legierung und einer Schichtdicke von ca. 1 bis 2 mm ausgesprüht und vom Abdruckmaterial getrennt. Nach dem Auflegen von Wachsfertigteilen und Abdecken der nicht zu galvanisierenden Stellen mit einem elektrisch isolierenden Lack werden die gewünschten Schichten 19 (Figur 16) galvanisch mit der benötigten Dicke abgeschieden, und eventuell Verblendmaterial 11 (Figur 17) aufgebaut. Bei diesem Aufbau einer partiellen Prothesebasis sind die Sekundärkronen als ein Stück eingefügt. Bei getrenntem Galvanisieren der Sekundärkronen und der partiellen Prothesenbasis erfolgt ein anschließendes Verlöten, wobei auch alle anderen gängigen Stütz- und Halteelemente verwendbar sind.

Mit dem erfindungsgemäßen Verfahren ist es also möglich durch Aufbau des Zahnersatzteils auf dem ersten Modell auf besonders einfache und wirtschaftliche Art und Weise hoch-präzise Zahnersatzteile herzustellen und zwar unter Verwendung von Kleingalvanisiergeräten wie sie in jedem Dentallabor oder Praxislabor einsetzbar sind und ohne Verwendung komplizierter Geräte zur Herstellung von Duplikaten. Die bei dem erfindungsgemäßen Verfahren hergestellten Duplikate dienen ausschließlich als Arbeitsmodelle für die Weiterverarbeitung zur endgültigen Fertigstellung der Zahnersatzteile, nicht jedoch, wie bei den bekannten Verfahren, zum Aufbau dieser Zahnersatzteile.

## Patentansprüche

1. Verfahren zur Herstellung von metallischen Zahnersatzteilen, wie Kronen, Inlays, Brücken, Prothesen etc., bei dem von dem zu behandelnden Zahn bzw. Kiefer ein Abdruck mittels eines elektrisch nicht leitenden Materials hergestellt und die Innenwand des Abdrucks (1) mit einer elektrisch leitenden Schicht (3) versehen wird, dadurch gekennzeichnet, daß

a) der Inneraum des Abdrucks (1) und der Schicht (3) mit einem Füllmaterial (4) ausgegossen wird, in das Haltestäbe (5) einsetzbar sind,

b) das durch die Schicht (3) und das Füllmaterial (4) gebildete Positivmodell vom Abdruck (1) getrennt wird,

c) auf das Positivmodell (3, 4) eine Zwischenschicht (8) aus einem unedlen Metall galvanisch aufgebracht wird,

d) auf die Zwischenschicht (8) eine oder mehrere Schichten (10) aus hochschmelzenden Metallen, insbesondere Edelmetallen, galvanisch aufgebracht werden, und

e) anschließend das Füllmaterial (4), die innerste elektrisch leitende Schicht (3) und die Zwischenschicht (8) von der einen oder den mehreren Schichten (10) aus hochschmelzenden Metallen entfernt werden.

2. Verfahren nach Anspruch 1, dadurch gekennzeichnet, daß die elektrisch leitende Schicht (3) durch Aufsprühen einer erhitzten niedrigschmelzenden Legierung hergestellt wird.

3. Verfahren nach Anspruch 1, dadurch gekennzeichnet, daß die elektrisch leitende Schicht (3) mittels eines stromlosen Reduktionsverfahrens hergestellt wird.

4. Verfahren nach Anspruch 1, dadurch gekennzeichnet, daß die elektrisch leitende Schicht (3) mittels Aufdampfen einer Metallschicht im Vakuum hergestellt wird.

5. Verfahren nach Anspruch I, dadurch gekennzeichnet, daß die elektrisch leitende Schicht (3) mittels Aufsprühens eines elektrisch leitenden Sprühlacks hergestellt wird.

6. Verfahren zum Herstellen von metallischen Zahnersatzteilen, wie Kronen, Inlays, Brücken, Prothesen etc., bei dem von dem zu behandelnden Zahn bzw. Kiefer ein Abdruck mittels eines elektrisch nicht leitenden Materiales hergestellt wird, dadurch gekennzeichnet,

a) daß der Innenraum dieses Abdrucks (1) mit einem elektrisch leitenden Kunststoff (4) ausgegossen wird, in den Haltestäbe (5) einsetzbar sind,

b) daß das durch diesen Kunststoff (4) gebildete Positivmodell vom Abdruck (1) getrennt wird,

c) daß auf das Positivmodell (4) eine Zwischenschicht (8) aus einem unedlen Material galvanisch aufgebracht wird,

d) daß auf die Zwischenschicht (8) eine oder mehrere Schichten (10) aus hochschmelzenden Metallen, insbesondere Edelmetallen, galvanisch aufgebracht werden, und

e) daß anschließend der Kunststoff (4) und die Zwischenschicht (8) von der einen oder den mehreren Schichten (10) aus hochschmelzenden Metallen entfernt werden.

7. Verfahren nach einem der Ansprüche I bis 6, dadurch gekennzeichnet, daß vor dem Aufbringen der elektrisch leitenden Schicht (3) der unter das Zahnfleisch gehende dünnwandige Bereich (2) des Abdrucks (I) stabilisiert wird durch Hinterfüllen mit einem geeigneten Material.

8. Verfahren nach einem der Ansprüche I bis 6, dadurch gekennzeichnet, daß vor dem Aufbringen der elektrisch leitenden Schicht (3) der unter das Zahnfleisch gehende, dünnwandige Bereich (2) des Abdrucks (I) durch Besprühen mit einem elektrisch leitenden Lack und anschließendes Aufbringen einer galvanischen Schicht stabilisiert wird.

9. Verfahren nach Anspruch 2, dadurch gekennzeichnet, daß die niedrigschmelzende Legierung (3) im Abdruck (I) mit einer Dicke von 0,I bis 2 mm aufgesprüht wird.

10. Verfahren nach einem der vorhergehenden Ansprüche, dadurch gekennzeichinet, daß das Positivmodell vor dem Galvanisieren an den nicht galvanisch zu beschichtenden Stellen mit einer elektrisch isolierenden Schicht (6) versehen wird.

11. Verfahren nach einem der vorhergehenden Ansprüche, dadurch gekennzeichnet, daß als Zwischenschicht (8) auf das Positivmodell eine Kupfer- oder Nickelschicht aufgebracht wird.

12. Verfahren nach einem der vorhergehenden Ansprüche, dadurch gekennzeichnet, daß nach dem Ausblocken des Positivmodells und nach dem galvanischen Aufbringen der Zwischenschicht (8) auf das Positivmodell dieses dupliziert wird.

13. Verfahren nach einem der vorhergehenden Ansprüche, dadurch gekennzeichnet, daß nach dem Entfernen der Zwischenschicht (8), der niedrigschmelzenden Legierung (3) und des Füllmaterials (4) von der galvanisch aufgebrachten Schicht (l0) aus hochschmelzendem Metall diese zur Weiterverarbeitung auf das Duplikat des Positivmodells aufgesetzt wird.

14. Verfahren nach einem der vorhergehenden Ansprüche, dadurch gekennzeichnet, daß die Schicht aus hochschmelzendem Metall (l0) in der statisch erforderlichen Dicke auf die Zwischenschicht (8) aufgebracht wird.

15. Verfahren nach einem der Ansprüche l bis 6, dadurch gekennzeichnet, daß nach Abnahme des Positivmodells vom Abdruck zusätzlich ein Brückenglied hergestellt wird, durch Aufwachsen eines Wachsfertigteils, Besprühen dieses Wachsteils mit einem leitenden Lack, galvanischem Aufbringen der Zwischenschicht auf Kronenpfeiler und Brückenglied, Aufgalvanisieren mit hochschmelzender Legierung, Entfernen des Positivmodells aus niedrigschmelzender Legierung und Füllmaterial, Ausbrühen des Wachses und Verfüllen des Hohlkörpers mit geeignetem Material oder Anbringen von aufbrennfähigen Metallfertigteilen zwischen die Brückenpfeiler, die im Hauptgalvanisierungsvorgang mitbeschichtet werden, oder Aufbringen und Fixieren von anbrennfähigen Porzellanfertigteilen vor dem endgültigen Verblenden.

16. Verfahren nach einem der Ansprüche l bis 6, dadurch gekennzeichnet, daß nach dem Trennen des Positivmodells vom Abdruck nach dem Ausblocken des Zahnstumpfes oder der Zahnstümpfe zusätzlich der für Konuskronen notwendige Stumpfaufbau aus niedrigschmelzendem Material zum anschließenden Fräsen aufgebaut wird, oder daß der Aufbau aus Wachs aufgetragen und gefräst wird, danach mit elektrisch leitfähigem Lack beschichtet wird, die Zwischenschicht elektrolytisch aufgebaut wird, die so entstandenen Stümpfe an den nicht zu galvanisierenden Flächen mit elektrisch nicht leitfähigem Material isoliert werden, daß anschließend eine Schicht aus hochschmelzenden Metallen abgeschieden wird, daß analog der gewünschten Friktion der Sekundärkrone eine leicht zu entfernende Schicht z.B. Nickel oder Kupfer aufgebracht wird, und daß von dem entstandenen Modell ein Abdruck genommen wird und wie bei Anspruch l die Sekundärkronenhülse galvanisiert wird.

17. Verfahren nach einem der Ansprüche l bis 6 zur Herstellung von partiellen Prothesenbasen, dadurch gekennzeichnet, daß nach dem Trennen des Positivmodells vom Abdruck das elektrisch leitfähige Modell dupliziert wird, daß auf dem Primärmodell Wachsfertigteile in Form der gewünschten Metallprothese aufgebracht werden, daß nicht zu galvanisierende Stellen isoliert werden, danach das Wachs (Schablone) entfernt wird, und daß eine oder mehrere Schichten aus hochschmelzenden Metallen galvanisch aufgebracht werden, wonach das Modell von der Unterlage getrennt wird und auf das Duplikat zur Weiterverarbeitung aufgesetzt wird.

18. Verfahren nach einem der vorhergehenden Ansprüche, dadurch gekennzeichnet, daß zur Erhöhung der Haftung des Verblendmaterials die galvanische Schicht (l0) durch Abstrahlen der Oberfläche, vorzugsweise mit Aluminiumoxid, aufgerauht wird.

**Claims**

1. Process for the production of metallic tooth replacement parts, such as crowns, inlays, bridges, prostheses etc., in which process an electrically non-conducting material is used to prepare an impression of the tooth or jaw to be treated, and the inner wall of the impression (1) is provided with an electrically conducting layer (3), characterised in that

   a) the inner space of the impression (1) and of the layer (3) is plugged with a filling material (4), into which retention rods (5) can be inserted,

   b) the positive model formed by the layer (3) and the filling material (4) is separated from the impression (1),

   c) an intermediate layer (8) of a base metal is electrodeposited onto the positive model (3, 4),

   d) one or more layers (10) of refractory metals, in particular noble metals, are electrodeposited onto the intermediate layer (8), and

   e) the filling material (4), the innermost electrically conducting layer (3) and the intermediate layer (8) are then removed from the one or the several layer(s) (10) of refractory metals.

2. Process according to Claim 1, characterised in that the electrically conducting layer (3) is produced by spraying-on of a heated low-melting-point alloy.

3. Process according to Claim 1, characterised in that the electrically conducting layer (3) is produced by means of a currentless reduction process.

4. Process according to Claim 1, characterised in that the electrically conducting layer (3) is produced by means of vapour-deposition of a metal layer in vacuo.

5. Process according to Claim 1, characterised in that the electrically conducting layer (3) is produced by means of spraying-on of an electrically conducting spray varnish.

6. Process for the production of metallic tooth replacement parts, such as crowns, inlays, bridges, prostheses etc., in which process an electrically non-conducting material is used to prepare an impression of the tooth or jaw to be treated, characterised
   a) in that the inner space of this impression (1) is plugged with an electrically conducting plastic (4) into which retention rods (5) can be inserted,
   b) in that the positive model formed by this plastic (4) is separated from the impression (1),
   c) in that an intermediate layer (8) of a base material is electrodeposited onto the positive model (4),
   d) in that one or more layers (10) of refractory metals, in particular noble metals, are electrodeposited onto the intermediate layer (8), and
   e) in that the plastic (4) and the intermediate layer (8) are then removed from the one or the several layer(s) (10) of refractory metals.

7. Process according to one of Claims 1 to 6, characterised in that, before application of the electrically conducting layer (3), the thin-walled area (2) of the impression (1) passing under the gum is stabilised by back-filling with a suitable material.

8. Process according to one of Claims 1 to 6, characterised in that, before application of the electrically conducting layer (3), the thin-walled area (2) of the impression (1) passing under the gum is stabilized by spraying with an electrically conducting varnish and subsequent application of an electrodeposit.

9. Process according to Claim 2, characterised in that the low-melting-point alloy (3) in the impression (1) is sprayed on in a thickness of 0.1 to 2 mm.

10. Process according to one of the preceding claims, characterised in that, before electroplating, the positive model is provided with an electrically insulating layer (6) at the points which are not to be electrocoated.

11. Process according to one of the preceding claims, characterised in that a copper or nickel layer is applied as intermediate layer (8) to the positive model.

12. Process according to one of the preceding claims, characterised in that, after blocking-out of the positive model and after electrodeposition of the intermediate layer (8) onto the positive model, the latter is duplicated.

13. Process according to one of the preceding claims, characterised in that, after removing the intermediate layer (8), the low-melting-point alloy (3) and the filling material (4) from the electrodeposited layer (10) of refractory metal, the latter is applied for further treatment to the duplicate of the positive model.

14. Process according to one of the preceding claims, characterised in that the layer of refractory metal (10) is applied to the intermediate layer (8) in the statically necessary thickness.

15. Process according to one of Claims 1 to 6, characterised in that, after removing the positive model from the impression, a bridge member is additionally prepared by waxing-up of a preformed wax part, spraying this wax part with a conducting varnish, electrodepositing the intermediate layer on crown abutments and bridge member, electrodepositing with refractory alloy, removing the positive model of low-melting-point alloy and filling material, scalding-out the wax and filling the hollow body with suitable material or applying fusable preformed metal parts between the bridge abutments, which are cocoated in the main electrodeposition procedure, or applying and fixing bakeable preformed porcelain parts before the final veneering.

16. Process according to one of Claims 1 to 6, characterised in that, after separating the positive model from the impression, after blocking-out of the tooth stump or tooth stumps, the stump construction necessary for cone crowns is additionally built up from low-melting-point material for subsequent milling, or in that the construction from wax is applied and milled, is thereafter coated with electrically conducting varnish, the intermediate layer is built up electrolytically, the resulting stumps are insulated

EP 0 236 782 B1

with electrically non-conducting material at the surfaces not to be electrocoated, in that subsequently a layer of refractory metals is deposited, in that, analogous to the desired friction of the secondary crown, an easily removable layer, for example nickel or copper, is applied, and in that an impression is taken of the resulting model and, as in Claim 1, the secondary crown form is electrodeposited.

17. Process according to one of Claims 1 to 6 for the production of partial prosthesis bases, characterised in that, after separating the positive model from the impression, the electrically conducting model is duplicated, in that preformed wax parts in the shape of the desired metal prosthesis are applied to the primary model, in that points not to be electrocoated are insulated, and the wax (template) is thereafter removed, and in that one or more layers of refractory metals are electrodeposited, after which the model is separated from the base and is applied to the duplicate for further treatment.

18. Process according to one of the preceding claims, characterised in that, in order to increase the adhesion of the veneer material, the electrodeposit (10) is roughened by blasting the surface, preferably with aluminium oxide.

**Revendications**

1. Procédé de fabrication d'éléments en métal pour remplacer des dents, tels que couronnes, inlays, bridges, prothèses, etc., dans lequel on réalise une empreinte de la dent ou de la gencive à traiter à l'aide d'une matière non conductrice d'électricité et on couvre la paroi intérieure de l'empreinte (1) avec une couche conductrice d'électricité (3), caractérisé en ce que
   a) l'espace intérieur de l'empreinte (1) avec la couche (3) est rempli d'une matière de remplissage (4), dans laquelle on peut installer des tiges de support (5),
   b) le modèle positif ainsi constitué de la couche (3) et de la matière de remplissage (4) est séparé de l'empreinte (1),
   c) une couche intermédiaire (8) en un métal commun est appliquée par galvanisation sur le modèle positif (3, 4),
   d) une ou plusieurs couches (10) en un métal à température de fusion élevée, en particulier en un métal noble, sont appliquées par galvanisation sur la couche intermédiaire (8), et
   e) après quoi la matière de remplissage (4), la couche interne (3) conductrice d'électricité et la couche intermédiaire (8) sont séparées de l'une ou de la pluralité de couches (10) en métal à température de fusion élevée.

2. Procédé selon la revendication 1, caractérisé en ce que la couche conductrice d'électricité (3) est réalisée par pulvérisation d'un alliage à température de fusion basse, chauffé.

3. Procédé selon la revendication 1, caractérisé en ce que la couche conductrice d'électricité (3) est réalisée par un procédé de réduction sans courant.

4. Procédé selon la revendication 1, caractérisé en ce que la couche conductrice d'électricité (3) est réalisée par dépôt d'une couche métallique sous vide.

5. Procédé selon la revendication 1, caractérisé en ce que la couche conductrice d'électricité (3) est réalisée par pulvérisation d'une laque à pulvériser conductrice d'électricité.

6. Procédé de fabrication d'éléments en métal pour remplacer des dents tels que couronnes, inlays, bridges, prothèses, etc., dans lequel on réalise une empreinte de la dent ou de la gencive à traiter à l'aide d'une matière non conductrice d'électricité, caractérisé en ce que
   a) l'espace intérieur de cette empreinte (1) est rempli d'une matière synthétique (4) conductrice d'électricité dans laquelle on peut installer des tiges de support (5),
   b) le modèle positif en matière synthétique (4) ainsi constitué est séparé de l'empreinte (1),
   c) une couche intermédiaire (8) en un métal commun est appliquée par galvanisation sur le modèle positif (4),
   d) une ou plusieurs couches (10) en un métal à température de fusion élevée, en particulier en un métal noble, sont appliquées par galvanisation sur la couche intermédiaire (8), et
   e) après quoi la matière synthétique (4) et la couche intermédiaire (8) sont séparées de l'une ou de la pluralité de couches (10) en métal à température de fusion élevée.

7. Procédé selon l'une des revendications 1 à 6, caractérisé en ce qu'avant l'application de la couche conductrice d'électricité (3), la partie à paroi mince (2) de l'empreinte (1) allant sous la gencive est stabilisée par remplissage avec une matière appropriée.

8

8. Procédé selon l'une des revendications 1 à 6, caractérisé en ce qu'avant l'application de la couche conductrice d'électricité (3), la partie à paroi mince (2) de l'empreinte (1) allant sous la gencive est stabilisée par pulvérisation avec une laque conductrice d'électricité et ensuite par l'application d'une couche de galvanisation.

9. Procédé selon la revendication 2, caractérisé en ce que l'alliage à température de fusion basse (3) de l'empreinte (1) est appliqué par pulvérisation selon une épaisseur de 0,1 à 2 mm.

10. Procédé selon l'une des revendications précédentes, caractérisé en ce que le modèle positif est pourvu avant la galvanisation d'une couche d'un isolant électrique (6) aux endroits qui ne sont pas destinés à recevoir une couche de galvanisation.

11. Procédé selon l'une des revendications précédentes, caractérisé en ce qu'en guise de couche intermédiaire (8), on applique sur le modèle positif une couche en cuivre ou en nickel.

12. Procédé selon l'une des revendications précédentes, caractérisé en ce qu'après le démoulage du modèle positif et l'application par galvanisation de la couche intermédiaire (8) sur le modèle positif, celui-ci est reproduit.

13. Procédé selon l'une des revendications précédentes, caractérisé en ce qu'après avoir séparé la couche intermédiaire (8), la couche d'alliage à température de fusion basse (3) et la matière de remplissage (4) de la couche de métal à température de fusion élevée (10) appliquée par galvanisation, cette dernière est installée sur la réplique du modèle positif, pour traitement ultérieur.

14. Procédé selon l'une des revendications précédentes, caractérisé en ce que la couche de métal à température de fusion élevée (10) est réalisée sur la couche intermédiaire (8) à l'épaisseur nécessaire sur le plan statique.

15. Procédé selon l'une des revendications 1 à 6, caractérisé en ce qu'après avoir sorti le modèle positif de l'empreinte, on réalise en outre un élément de bridge par croissance d'une pièce de base en cire, en aspergeant cette pièce en cire avec une laque conductrice, en appliquant par galvanisation la couche intermédiaire sur le pivot de la couronne et sur l'élément de bridge, en appliquant par galvanisation l'alliage à point de fusion élevé, en séparant le modèle positif de l'alliage à point de fusion bas et de la matière de remplissage, en échaudant la cire et en remplissant le corps creux avec un matériau approprié ou en plaçant des pièces de base en un métal résistant à la combustion entre les pivots du bridge, qui sont recouverts dans le procédé principal de galvanisation, ou en faisant appel à la fixation de pièces fabriquées en une porcelaine résistante à la combusion avant l'application du revêtement final.

16. Procédé selon l'une des revendications 1 à 6, caractérisé en ce qu'après la séparation du modèle positif de l'empreinte après l'extraction du chicot ou des chicots, on réalise en plus la structure du moignon nécessaire pour la couronne conique en un matériau à température de fusion faible que l'on fraise ensuite, ou bien en ce que cette structure est réalisée en cire que l'on fraise ensuite, après quoi on recouvre avec une laque conductrice d'électricité, on réalise la couche intermédiaire par électrolyse, on isole avec une matière non conductrice d'électricité les surfaces du moignon ainsi créé qui ne doivent pas être galvanisées, en ce qu'on précipite ensuite une couche de métal à point de fusion élevé, en ce que, selon la friction souhaitée sur la couronne secondaire, on applique une couche facile à enlever, par exemple de nickel ou de cuivre, et en ce qu'à l'aide du modèle réalisé, on fait une empreinte et on galvanise la coque de couronne secondaire comme dans la revendication 1.

17. Procédé selon l'une des revendications 1 à 6 pour la réalisation de bases de prothèses partielles, caractérisé en ce qu'après la séparation du modèle positif de l'empreinte, le modèle conducteur d'électricité est reproduit, en ce que des pièces de base en cire ayant la forme de la prothèse métallique souhaitée sont appliquées sur le modèle primaire, en ce que les portions qui ne doivent pas être galvanisées sont isolées, puis la cire (gabarit) est enlevée, et en ce qu'une ou plusieurs couches de métal à température de fusion élevée sont appliquées par galvanisation, après quoi le modèle est enlevé de la base et placé sur la réplique pour traitement ultérieur.

18. Procédé selon l'une des revendications précédentes, caractérisé en ce que pour augmenter l'adhérence du matériau de revêtement, la couche galvanique (10) est rendue rugueuse par décapage au jet de sable, de préférence en utilisant de l'oxyde d'aluminium.

FIG. 1

FIG. 2

FIG. 3

FIG. 4

FIG. 5

10

_FIG. 6_

_FIG. 7_

_FIG. 8_

_FIG. 9_

_FIG. 10_

_FIG. 11_

_FIG. 12_

*FIG. 13*

*FIG. 14*

*FIG. 15*

*FIG. 16*

*FIG. 17*

*FIG. 18*

*FIG. 19*

*FIG. 20*

*FIG. 21*

*FIG. 22*

*FIG. 23*

*FIG. 24*